# EUROPEAN PATENT APPLICATION

(11) **EP 4 715 765 A1**
(43) Date of publication of application: **25.03.2026**
(21) Application number: 24201596.4
(22) Date of filing: 20.09.2024
(51) Int. Cl.: G06V 40/40, G06V 40/10, G06V 40/16, G06V 40/50, G06V 40/70

(54) **USER AUTHENTICATION DEVICE AND OPERATING METHOD THEREOF**

(71) Applicant: NXP B.V., 5656 AG Eindhoven (NL)
(72) Inventor: Veshchikov, Nikita, 5656 AG Eindhoven (NL); Boehl, Florian, 5656 AG Eindhoven (NL)
(74) Representative: Krott, Michel

(57) **Abstract**

In accordance with a first aspect of the present disclosure, a user authentication device is provided, comprising: a face recognition unit configured to receive a visual input and to extract a biometric marker from said visual input, the biometric marker being a face; a user identification unit configured to identify a user based on the biometric marker extracted by the face recognition unit; a liveness detection unit configured to detect whether the user identified by the user identification unit is a living person, by extracting one or more additional biometric markers from the visual input received by the face recognition unit. In accordance with further aspects of the present disclosure, a corresponding operating method is conceived, and a computer program for carrying out said method is provided.

## Description

### TECHNICAL FIELD

The present disclosure relates to a user authentication device. Furthermore, the present disclosure relates to a corresponding method of operating a user authentication device, and to a computer program for carrying out said method.

### BACKGROUND

There are multiple ways to identify and authenticate a person. One of them uses biometrics, in which case physical characteristics of a person are used for the identification and authentication of said person. Commonly used physical characteristics are fingerprints, iris patterns and faces. However, in case face recognition is used, a security risk arises.

### SUMMARY

In accordance with a first aspect of the present disclosure, a user authentication device is provided, comprising: a face recognition unit configured to receive a visual input and to extract a biometric marker from said visual input, the biometric marker being a face; a user identification unit configured to identify a user based on the biometric marker extracted by the face recognition unit; a liveness detection unit configured to detect whether the user identified by the user identification unit is a living person, by extracting one or more additional biometric markers from the visual input received by the face recognition unit.

In one or more embodiments, the additional biometric markers comprise a heart rate.

In one or more embodiments, the liveness detection unit is configured to extract the heart rate from the visual input by applying color amplification and/or motion amplification to the visual input.

In one or more embodiments, the additional biometric markers comprise face characteristics analyzed using multiple cameras or multiple views, and/or predefined movement patterns of the head of the user.

In one or more embodiments, the additional biometric markers comprise a reconstructed three-dimensional model of the face, obtained by illumination of the face from different angles relative to a reference point on the face, and by analyzing the effects of said illumination.

In one or more embodiments, the additional biometric markers comprise a predefined behavior of pupils after the face has been illuminated.

In one or more embodiments, the additional biometric markers comprise one or more bodily movements performed in response to a challenge provided by the liveness detection unit.

In one or more embodiments, the liveness detection unit comprises a secure element configured to provide said challenge.

In one or more embodiments, the secure element is further configured to verify whether the bodily movements performed in response to said challenge correspond to an expected response.

In one or more embodiments, the bodily movements performed in response to the challenge and the expected response are encoded as checksums.

In accordance with a second aspect of the present disclosure, a method of operating a user authentication device is conceived, comprising: receiving, by a face recognition unit included in the user authentication device, a visual input and extracting a biometric marker from said visual input, the biometric marker being a face; identifying, by a user identification unit included in the user authentication device, a user based on the biometric marker extracted by the face recognition unit; detecting, by a liveness detection unit included in the user authentication device, whether the user identified by the user identification unit is a living person, by extracting one or more additional biometric markers from the visual input received by the face recognition unit.

In one or more embodiments, the additional biometric markers comprise a heart rate.

In one or more embodiments, the liveness detection unit extracts the heart rate from the visual input by applying color amplification or motion amplification to the visual input.

In one or more embodiments, the additional biometric markers comprise face characteristics analyzed using multiple cameras or multiple views, and/or predefined movement patterns of the head of the user.

In accordance with a third aspect of the present disclosure, a computer program is provided, comprising executable instructions which, when executed by a user authentication device of the kind set forth, cause said user authentication device to carry out a method of the kind set forth.

### DESCRIPTION OF DRAWINGS

Embodiments will be described in more detail with reference to the appended drawings.
Fig. 1 shows an illustrative embodiment of a user authentication device.
Fig. 2 shows an illustrative embodiment of a method of operating a user authentication device.
Fig. 3 shows an illustrative embodiment of a user authentication system.
Fig. 4 shows an illustrative embodiment of a user authentication process.
Fig. 5 shows different camera views.
Fig. 6 shows a movement trajectory of a smartphone.
Fig. 7 shows a movement trajectory of a head.
Fig. 8 shows another illustrative embodiment of a user authentication process.
Fig. 9 shows an illustrative embodiment of an enrolment process for a user authentication system.

### DESCRIPTION OF EMBODIMENTS

As mentioned above, there are multiple ways to identify and authenticate a person. One of them uses biometrics, in which case physical characteristics of a person are used for the identification and authentication of said person. Commonly used physical characteristics are fingerprints, iris patterns and faces. However, in case face recognition is used, a security risk arises. In particular, there are several attacks that try to circumvent authentication through face recognition. The most simple attacks use a photo or a video of a person that the attacker is trying to impersonate. These attacks may be referred to as "input attacks" as they target tricking the biometric authentication system purely by providing specific, maliciously crafted inputs. The existence of such types of attacks increases the need for the implementation of countermeasures. Usually, countermeasures against such types of attacks in biometrics are referred as liveness detection. However, cameras that are used for face recognition may have a variable quality, while a video of a person and a screen that is being used for an attack may have a high quality. This makes some of the liveness detection techniques less effective. Some other types of attacks against face recognition systems may rely on the fact that the hardware used in the face recognition system (e.g., a smartphone) is not very secure and may be hacked using malware.

Now discussed are a user authentication device and a corresponding method of operating a user authentication device, which use face recognition while maintaining a relatively high level of security. In particular, the presently disclosed user authentication device and corresponding operating method facilitate increasing the resistance against attacks of the kind set forth above.

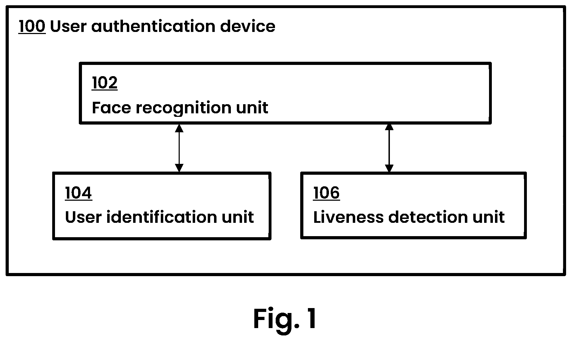

**Fig. 1** shows an illustrative embodiment of a user authentication device 100. The user authentication device 100 comprises a face recognition unit 102, a user identification unit 104, and a liveness detection unit 106. Although these units 102, 104, 106 have been shown as separate components, some or all of them may be integrated into the same physical component. Furthermore, the units 102, 104, 106 may be implemented as hardware, software or a combination thereof. For instance, some or all the units 102, 104, 106 may be implemented as data processors. The face recognition unit 102 is configured to receive a visual input and to extract a biometric marker from said visual input, the biometric marker being a face. Furthermore, the user identification unit 104 is configured to identify a user based on the biometric marker extracted by the face recognition unit 102. Finally, the liveness detection unit 106 is configured to detect whether the user identified by the user identification unit 104 is a living person, by extracting one or more additional biometric markers from the visual input received by the face recognition unit 102. By extracting at least one additional biometric marker from said visual input, the liveness of the identified user may be detected effectively, thereby increasing the resistance against attacks on the face recognition-based authentication.

In one or more embodiments, the additional biometric markers comprise a heart rate. The heart rate represents a biometric marker which is particularly suitable to verify the liveness of a user identified by means of face recognition. Thus, in this way, the resistance against attacks on the face recognition-based authentication is further increased. In one or more embodiments, the liveness detection unit is configured to extract the heart rate from the visual input by applying color amplification and/or motion amplification to the visual input. Applying color amplification or motion amplification to visual input (e.g., video input) results in a reliable manner to extract the heart rate from said visual input.

In one or more embodiments, the additional biometric markers comprise face characteristics analyzed using multiple cameras or multiple views, and/or predefined movement patterns of the head of the user. These biometric markers are particularly suitable to verify the liveness of a user identified by means of face recognition. Thus, in this way, the resistance against attacks on the face recognition-based authentication is further increased. The face characteristics may include, for example, characteristics of the face topology. In one or more embodiments, the additional biometric markers comprise a reconstructed three-dimensional model of the face, obtained by illumination of the face from different angles relative to a reference point on the face, and by analyzing the effects of said illumination. Such a reconstructed model represents a biometric marker which is particularly suitable to verify the liveness of a user identified by means of face recognition. Thus, in this way, the resistance against attacks on the face recognition-based authentication is further increased. Furthermore, in one or more embodiments, the additional biometric markers comprise a predefined behavior of pupils after the face has been illuminated. The behavior of the pupils of the identified user, after illumination, represents a biometric marker which is particularly suitable to verify the liveness of said user. Thus, in this way, the resistance against attacks on the face recognition-based authentication is further increased.

In one or more embodiments, the additional biometric markers comprise one or more bodily movements performed in response to a challenge provided by the liveness detection unit. By providing the identified user with a challenge of this kind, i.e. a request to perform predefined bodily movements, and analyzing whether said movements are correctly performed, the liveness of the identified user may easily be verified. Thus, in this way, the resistance against attacks on the face recognition-based authentication is further increased. In one or more embodiments, the liveness detection unit comprises a secure element configured to provide said challenge. If the challenge is provided by a secure element instead of, for example, a general-purpose processor, it will be more difficult for an attacker to obtain knowledge on the challenge and manipulate it. Thus, in this way, the resistance against attacks on the face recognition-based authentication is further increased. More specifically, the likelihood that the above-mentioned malware-based hacking attacks will succeed may be reduced significantly. It is noted that a secure element may be defined as a tamper-resistant integrated circuit with installed or pre-installed applications, which have a prescribed functionality and a prescribed level of security. Furthermore, a secure element may implement security functions, such as cryptographic functions and authentication functions. In one or more embodiments, the secure element is further configured to verify whether the bodily movements performed in response to said challenge correspond to an expected response. If the response to the challenge is also verified by the secure element, instead of by a general-purpose processor, the level of security is further increased. In a practical implementation, the bodily movements performed in response to the challenge and the expected response are encoded as checksums.

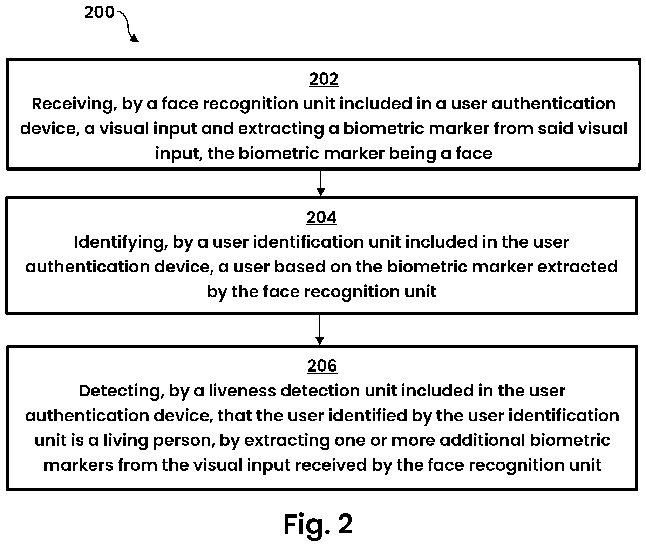

**Fig. 2** shows an illustrative embodiment of a method 200 of operating a user authentication device. The method 200 comprises the following steps. At 202, a face recognition unit included in the user authentication device receives a visual input and extracts a biometric marker from said visual input, the biometric marker being a face. At 204, a user identification unit included in the user authentication device identifies a user based on the biometric marker extracted by the face recognition unit. Furthermore, at 206, a liveness detection unit included in the user authentication device detects whether the user identified by the user identification unit is a living person, by extracting one or more additional biometric markers from the visual input received by the face recognition unit. As mentioned above, by extracting at least one additional biometric marker from said visual input, the liveness of the identified user may be detected effectively, thereby increasing the resistance against attacks on the face recognition-based authentication.

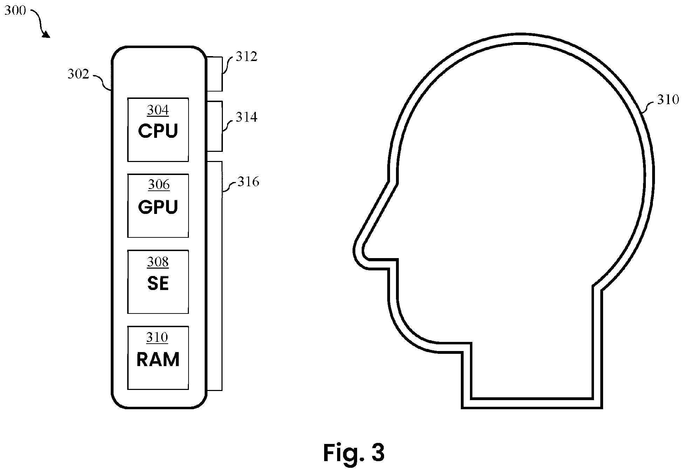

**Fig. 3** shows an illustrative embodiment of a user authentication system 300. The user authentication system 300 comprises a smartphone 302 which may be used to authenticate a user 310. The smartphone 302 comprises a central processing unit (CPU) 304, a graphics processing unit (GPU) 306, a secure element (SE) 308), and a random access memory (RAM) 310. Furthermore, the smartphone 302 comprises a light 312, a camera 314, and a screen 316. The smartphone 302 represents a non-limiting example of a user authentication device of the kind set forth. By means of the camera 314 visual input may be collected, from which a face may be extracted, and a liveness check may be performed using additional biometric markers of the kind set forth above. Furthermore, the secure element 308 may be used to implement a challenge-response scheme of the kind set forth above. Another non-limiting example of a user authentication device of the kind set forth would be a device integrated into a vehicle, with a face recognition technology for driver authentication.

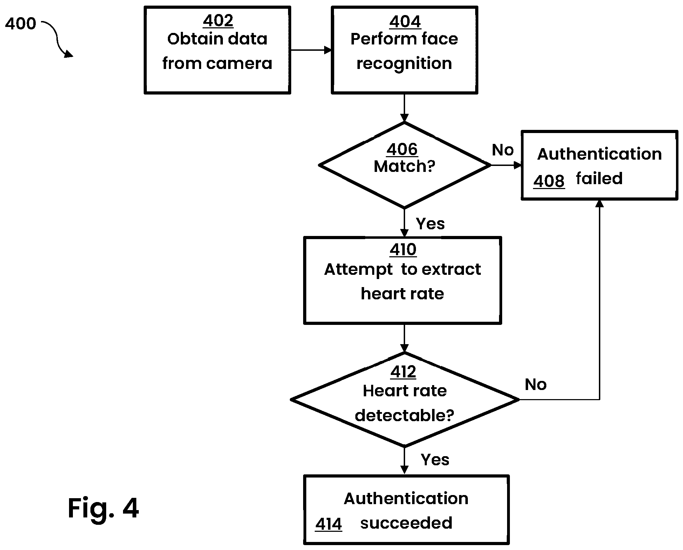

**Fig. 4** shows an illustrative embodiment of a user authentication process 400. The process 400 comprises the following steps. At 402, data is obtained from a camera 402. Then, face recognition is performed 404 using these data. In case of a match 406 (i.e., in case of a positive identification of a user), the process 400 proceeds with an attempt 410 to extract a heart rate from the data obtained from the camera. Otherwise, the authentication has failed 408. If, at 412, a heart rate is detectable in the data obtained from the camera, the authentication has succeeded 414.

The presence of a heart rate is a good indicator of the fact that the object in front of the camera is a living person. It is possible to extract the heart rate from a video of a person. There are at least two techniques that may be used for extracting such information. A first technique is based on color amplification; this technique has been described, for example, in the paper "Eulerian video magnification for revealing subtle changes in the world", written by Hao-Yu Wu et al. and published in the ACM Transactions on Graphics (TOG), Volume 31, Issue 4 (DOI: 10.1145/2185520.21855). A second technique is based on motion amplification; this technique has been described, for example, in the paper "Detecting Pulse from Head Motions in Video", written by Guha Balakrishnan et al. and published at the IEEE Conference on Computer Vision and Pattern Recognition, 23-28 June 2013 (DOI: 10.1109/CVPR.2013.440). It is noted that even though both techniques use the amplification of small changes in the video they use different information: the first technique bases its analysis on color and the second bases its analysis on movement.

Thus, an additional biometric marker (i.e., the heart rate) may be extracted from the visual input that is already available in the system. That is to say, the camera is already filming a person for the purpose of face recognition, and thus all the hardware is already in place. By extracting the heart rate in one way, or even in two different ways, the presence of the heart rate may be used for liveness detection. Furthermore, by extracting the heart rate in two different ways, the heart rate may be double-checked in order to cope with noise and any attacks that might be able to fake one of them but not the other one, since that would result in a mismatch between the output of the two techniques. It is noted that both techniques for heart rate detection may be used at the same time, or only one of them may be used. If the heart rate is detectable but too irregular, then that might also indicate some attacks. Similarly, if the heart rate is too regular, then it might be generated by an algorithm or a machine that is trying to trick the system. In other words, some noise is expected in the heart rate of a person.

It is noted that if persons are holding a user authentication device with a camera in their hand then there might be additional movement caused by small movements of the hand. This effect might be compensated by using image stabilization; in that case the whole picture will be more stable while the head would still move as assumed by the motion amplification technique. Alternatively, data from a gyroscope may be used to negate the effects of the movements of the smartphone itself.

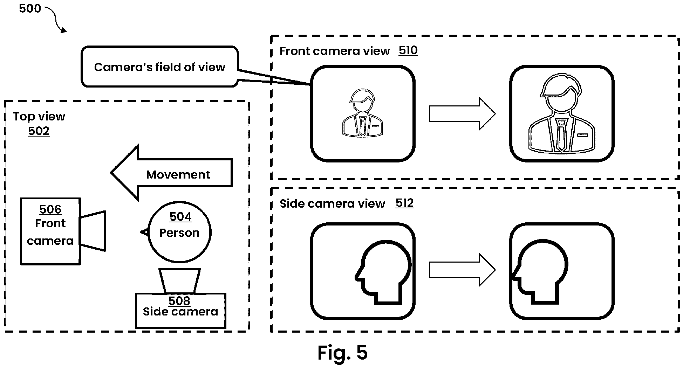

**Fig. 5** shows different camera views 500. It is possible to enhance the liveness detection and face recognition using multiple cameras or multiple views of the same person using one camera. In the second scenario the person might need to turn their head or move the camera to the side (e.g., if the camera is in a smartphone). Fig. 5 shows a system in which two cameras 506, 508 are used to perform a double-check on the face recognition by means of which a person 504 is authenticated. By having two (or more) cameras the system may perform said double-check using for example a frontal view 510 and a side view 512. In addition to this double-check, the system may also verify if the same points of the face as viewed from the side and from the front move as expected and are located in correct coordinates relative to each other. For example, if the head is moving towards the front camera 506 (which can be detected because the head will be bigger in the frontal view 510), then it is expected that at the same time and at the same rate the head will move towards the side in the side view 512. It is noted that many more of such movements may be defined and used during the authentication process.

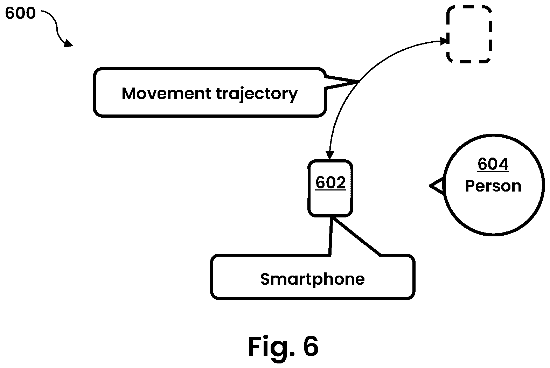

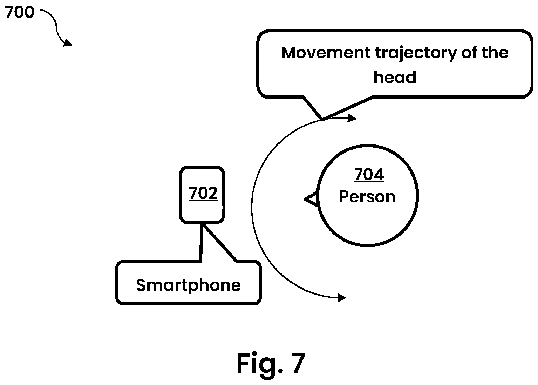

**Figs. 6** **and** **7** show different movement trajectories, in particular a movement trajectory 600 of a smartphone 602 carried by a person 604, and a movement trajectory 700 of the head of a person 704 as observed by a smartphone 702, respectively. In particular, Figs. 6 and 7 illustrate how a system in which only a single camera is available may detect whether a person 604, 704 identified by means of face recognition is a living person. In case only one camera is available then the system may ask the user to slowly shift it, as shown in Fig. 6, or to turn his or her head to the left or to the right as shown in Fig. 7. In this way, the system may check that the person in front of the camera is a real, three-dimensional person and not a flat image of a person on a screen or a printed photo. In case the user turns his or her head, the direction may be chosen at random to avoid recorded videos being used. The movement of the camera has the advantage that the movement of the background behind the person indicates that the camera is in fact moving; this fact may be also be verified by using accelerometer readings.

As mentioned above, the additional biometric markers may comprise a reconstructed 3D model of a face, obtained by illumination of the face from different angles relative to a reference point on the face, and by analyzing the effects of said illumination. More specifically, the shape of the face may be checked using lights and shadows. If a human face is illuminated from different angles shadows may be observed on different parts of the face. For example, if the source of light is on the right side of the person then the shadow of their nose will be on the left side of the face. Other features of the face will also be illuminated differently depending on the angle at which the light falls on the face. By analyzing the light spots and the dark spots on the face with several different lights being on or off, the 3D model of the face may be reconstructed and checked against a known model that was captured during an enrolment phase. It is noted that if a screen with a video or a photo of a person is used in an attempt to trick the authentication system, then the shadows will not change their location in the same way as on a real face of a person. Thus, certain types of attacks against face recognition may be detected.

Furthermore, it is possible to have separate models for the normal face recognition and face recognition using the 3D reconstruction based on lighting from different sources. This may serve as an additional check for the authentication. Most devices already have different light sources that can be used to illuminate the face of a person during the authentication. A smartphone might even use the screen as the source of light by increasing the screen luminosity; for example, by turning all pixels white the face of a person looking at his or her phone may be illuminated. Furthermore, a car often has lights just above the driver and some modern cars also have light-emitting diode (LED) screens which may be used in the same way as the screen of a smartphone.

In some cases, it may also be possible to use the light of different colors to check how the shadows and highlights change colors when the face is illuminated. This technique may be further augmented by using two different sources of light of different colors at the same time. If the sources of light are located relatively far apart from each other color addition or subtraction effects may be observed in highlights and shadows. If these effects are not observed, then the system may decide that an attack is likely being carried out. In addition to looking at shadows and highlights when the face is illuminated, it is possible to analyze the behavior of the pupils. After being illuminated they should contract and then expand when the additional light sources are off. Analysis of their behavior may give an additional check for the liveness detection.

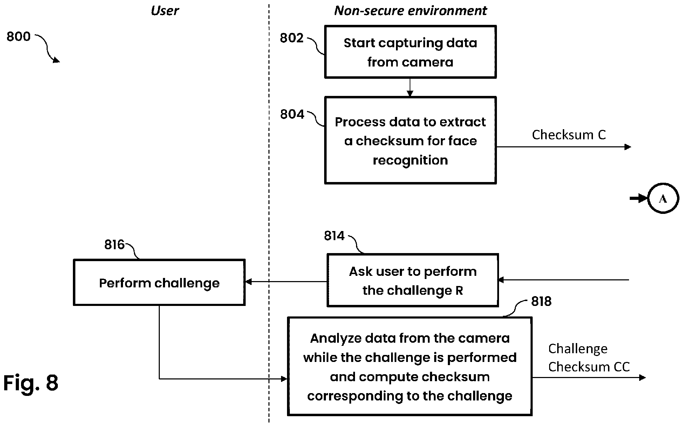

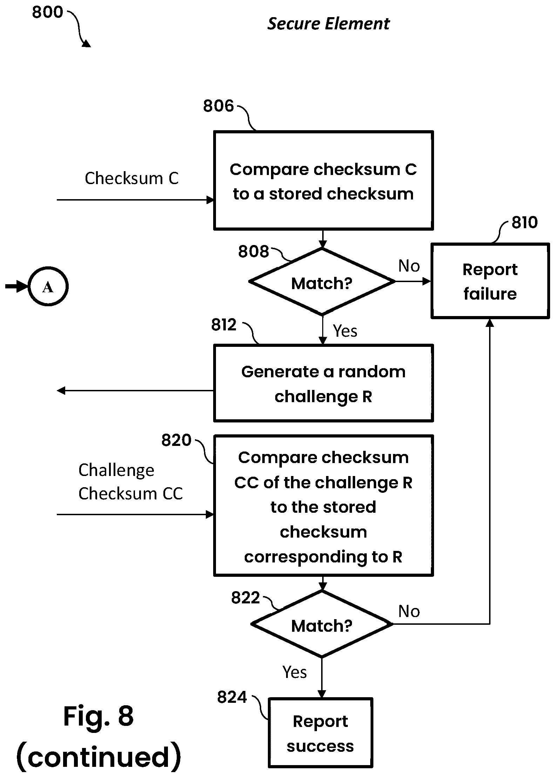

**Fig. 8** shows another illustrative embodiment of a user authentication process 800. The process 800 contains the following steps. At 802, the process starts with capturing data from a camera in a non-secure environment (e.g., by a general-purpose processor. Then, at 804, the data is processed in order to extract a checksum for face recognition. This checksum (referred to a "checksum C") is provided to a secure element, which compares 806 it to a stored checksum. If there is no match 808 between the checksum C and the stored checksum, a failure is reported 810. However, if there is a match 808, the secure element generates 812 a random challenge R and provides it to the non-secure environment. This environment asks 814 the user to perform the challenge R, and subsequently the user performs 816 it. Furthermore, the non-secure environment analyzes 818 the data from the camera while the challenge R is performed and computes a checksum corresponding to the challenge (referred to as "checksum CC"), which is provided to the secure element. Next, the secure element compares 820 the checksum CC of the challenge R to a stored checksum corresponding to R. If there is no match 822 between the checksum CC and the stored checksum, a failure is reported 810. However, if there is a match 822, a success is reported 824.

The process 800 shown in Fig. 8 represents a non-limiting example of how a liveness detection unit may provide a user with a challenge to perform one or more bodily movements, and analyze these movements when they are performed by the user, to enhance the face recognition with a challenge-based liveness detection. For this purpose, the liveness detection unit comprises a non-secure part (e.g., the general-purpose processor) and a secure element. The idea behind this enhancement is to bring more security to the authentication process by making it interactive, instead of relying on a completely static view of a person during the face recognition. This would introduce some randomness into the authentication process and would not allow an attack that uses video recordings, for example.

More specifically, the user may be asked to perform an action during the face recognition. The request to perform this action may originate from the secure element and the final check (i.e., the verification of the response to the challenge) may also be performed by this secure element. In this way, even if a main, general-purpose processor is compromised, the secure element would be able to detect the attack. There are many different actions that users may be asked to perform, for example: tilt the head to the left or right, close their eyes, open their mouth, smile, turn their head to the left or right, show their tongue, and look up, down, left or right. Moreover, in some scenarios these actions may be extended to specific gestures, such as: "touch your nose with your index finger of the right hand" or "cover your left eye with your left hand".

Once the user performs a given challenge, the device may authenticate the gesture or action of the user by checking if it is the correct one (i.e., the gesture or action that the user was requested to perform) and by checking if the user is still the same. If both of these are correct, the authentication may be deemed to have been successful. It is noted that the extraction of features may be done in the non-secure environment, while the final check may be done by the secure element. If the user does not perform the required action or if the main system is compromised, then the secure element may be able to detect this. If the user is not a legitimate one (e.g., if a video recording is used), then he or she will most likely not be able to guess in advance correctly which random action would be requested and thus the authentication will fail.

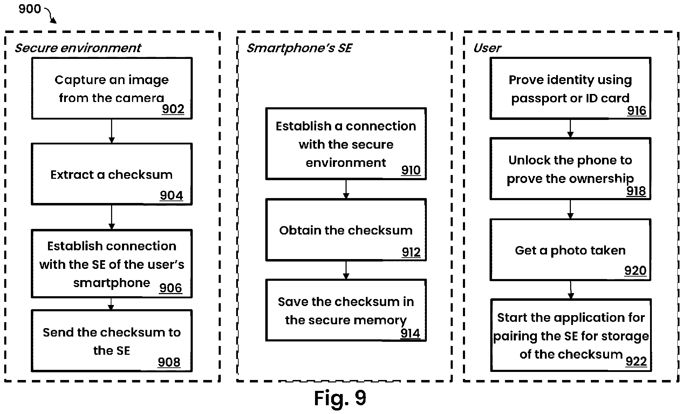

**Fig. 9** shows an illustrative embodiment of an enrolment process 900 for a user authentication system of the kind set forth. Face recognition is typically performed using certain types of machine learning algorithms. The output of such an algorithm for face recognition tasks resembles a large number and is sometimes referred to as a fingerprint, a checksum or a feature vector. The output of the algorithm is typically stored during an enrolment phase, and compared against the one that was stored during authentication. The computation of the checksum may be done in a non-secure environment, for example in the CPU or the GPU of a smartphone. In contrast, the comparison between the stored checksum and the freshly computed one would be performed in the secure environment (i.e., the secure element). The checksum should not be stored in the non-secure environment. Furthermore, it is assumed that during the enrolment the system is not compromised.

Alternatively, a different secure system (in a secure physical environment, for example in a government building) may be used to extract the first checksum for enrolment. In that case, the secure system may send the checksum, in encrypted form, to the secure element of the smartphone. A non-limiting example of such a process 900 is shown in Fig. 9. In the secure environment, an image is captured 902 from a camera, a checksum is extracted 904 from said data, a connection is established 906 with the secure element of the smartphone, and the checksum is sent 908 to said secure element. The secure element establishes 910 a connection with the secure environment, obtains 912 the checksum and saves 914 it its secure memory. In order to facilitate this enrolment, the user proves 916 his or her identity using a passport or ID card, unlocks 918 the phone to prove the ownership, gets 920 a photo taken, and starts 922 the application for pairing the secure element for storage of the checksum.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor", "data processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: user authentication device
- 102: face recognition unit
- 104: user identification unit
- 106: liveness detection unit
- 200: method of operating a user authentication device
- 202: receiving, by a face recognition unit included in a user authentication device, a visual input and extracting a biometric marker from said visual input, the biometric marker being a face
- 204: identifying, by a user identification unit included in the user authentication device, a user based on the biometric marker extracted by the face recognition unit
- 206: detecting, by a liveness detection unit included in the user authentication device, whether the user identified by the user identification unit is a living person, by extracting one or more additional biometric markers from the visual input received by the face recognition unit
- 300: user authentication system
- 302: smartphone
- 304: central processing unit (CPU)
- 306: graphics processing unit (GPU)
- 308: secure element (SE)
- 310: random access memory (RAM)
- 310: user to be authenticated
- 312: light
- 314: camera
- 316: screen
- 400: user authentication process
- 402: obtain data from camera
- 404: perform face recognition
- 406: match?
- 408: authentication failed
- 410: attempt to extract heart rate
- 412: heart rate detectable?
- 414: authentication succeeded
- 500: camera views
- 502: top view
- 504: person
- 506: front camera
- 508: side camera
- 510: front camera view
- 512: side camera view
- 600: movement trajectory of a smartphone
- 602: smartphone
- 604: person
- 700: movement trajectory of a head
- 702: smartphone
- 704: person
- 800: user authentication process
- 802: start capturing data from camera
- 804: process data to extract a checksum for face recognition
- 806: compare checksum C to a stored checksum
- 808: match?
- 810: report failure
- 812: generate a random challenge R
- 814: ask user to perform the challenge R
- 816: perform challenge
- 818: analyze data from the camera while the challenge is performed and compute checksum corresponding to the challenge
- 820: compare checksum CC of the challenge R to the stored checksum corresponding to R
- 822: match?
- 824: report success
- 900: enrolment process for a user authentication system
- 902: capture an image from the camera
- 904: extract a checksum
- 906: establish connection with the SE of the user's smartphone
- 908: send the checksum to the SE
- 910: establish a connection with the secure environment
- 912: obtain the checksum
- 914: save the checksum in the secure memory
- 916: prove identity using passport or ID card
- 918: unlock the phone to prove the ownership
- 920: get a photo taken
- 922: start the application for pairing the SE for storage of the checksum

## Claims

1. A user authentication device, comprising:
a face recognition unit configured to receive a visual input and to extract a biometric marker from said visual input, the biometric marker being a face;
a user identification unit configured to identify a user based on the biometric marker extracted by the face recognition unit;
a liveness detection unit configured to detect whether the user identified by the user identification unit is a living person, by extracting one or more additional biometric markers from the visual input received by the face recognition unit.

2. The user authentication device of claim 1, wherein the additional biometric markers comprise a heart rate.

3. The user authentication device of claim 2, wherein the liveness detection unit is configured to extract the heart rate from the visual input by applying color amplification and/or motion amplification to the visual input.

4. The user authentication device of any preceding claim, wherein the additional biometric markers comprise face characteristics analyzed using multiple cameras or multiple views, and/or predefined movement patterns of the head of the user.

5. The user authentication device of any preceding claim, wherein the additional biometric markers comprise a reconstructed three-dimensional model of the face, obtained by illumination of the face from different angles relative to a reference point on the face, and by analyzing the effects of said illumination.

6. The user authentication device of any preceding claim, wherein the additional biometric markers comprise a predefined behavior of pupils after the face has been illuminated.

7. The user authentication device of any preceding claim, wherein the additional biometric markers comprise one or more bodily movements performed in response to a challenge provided by the liveness detection unit.

8. The user authentication device of claim 7, wherein the liveness detection unit comprises a secure element configured to provide said challenge.

9. The user authentication device of claim 8, wherein the secure element is further configured to verify whether the bodily movements performed in response to said challenge correspond to an expected response.

10. The user authentication device of claim 9, wherein the bodily movements performed in response to the challenge and the expected response are encoded as checksums.

11. A method of operating a user authentication device, comprising:
receiving, by a face recognition unit included in the user authentication device, a visual input and extracting a biometric marker from said visual input, the biometric marker being a face;
identifying, by a user identification unit included in the user authentication device, a user based on the biometric marker extracted by the face recognition unit;
detecting, by a liveness detection unit included in the user authentication device, whether the user identified by the user identification unit is a living person, by extracting one or more additional biometric markers from the visual input received by the face recognition unit.

12. The method of claim 11, wherein the additional biometric markers comprise a heart rate.

13. The method of claim 12, wherein the liveness detection unit extracts the heart rate from the visual input by applying color amplification or motion amplification to the visual input.

14. The method of any one of claims 11 to 13, wherein the additional biometric markers comprise face characteristics analyzed using multiple cameras or multiple views, and/or predefined movement patterns of the head of the user.

15. A computer program comprising executable instructions which, when executed by the user authentication device of any one of claims 1 to 10, cause said user authentication device to carry out the method of any one of claims 11 to 14.

## Amended claims

### Amended claims in accordance with Rule 137(2) EPC.

1. A user authentication device, comprising:
a face recognition unit configured to receive a visual input and to extract a biometric marker from said visual input, the biometric marker being a face;
a user identification unit configured to identify a user based on the biometric marker extracted by the face recognition unit;
a liveness detection unit configured to detect whether the user identified by the user identification unit is a living person, by extracting one or more additional biometric markers from the visual input received by the face recognition unit, wherein the additional biometric markers comprise a heart rate and one or more bodily movements performed in response to a challenge provided by the liveness detection unit;
**characterized in that** the liveness detection unit comprises a secure element implemented as a tamper-resistant integrated circuit, wherein the secure element is configured to provide said challenge and to verify whether the bodily movements performed in response to said challenge correspond to an expected response.

2. The user authentication device of claim 1, wherein the liveness detection unit is configured to extract the heart rate from the visual input by applying color amplification and/or motion amplification to the visual input.

3. The user authentication device of any preceding claim, wherein the additional biometric markers comprise face characteristics analyzed using multiple cameras or multiple views, and/or predefined movement patterns of the head of the user.

4. The user authentication device of any preceding claim, wherein the additional biometric markers comprise a reconstructed three-dimensional model of the face, obtained by illumination of the face from different angles relative to a reference point on the face, and by analyzing the effects of said illumination.

5. The user authentication device of any preceding claim, wherein the additional biometric markers comprise a predefined behavior of pupils after the face has been illuminated.

6. The user authentication device of any preceding claim, wherein the bodily movements performed in response to the challenge and the expected response are encoded as checksums.

7. A method of operating a user authentication device, comprising:
receiving, by a face recognition unit included in the user authentication device, a visual input and extracting a biometric marker from said visual input, the biometric marker being a face;
identifying, by a user identification unit included in the user authentication device, a user based on the biometric marker extracted by the face recognition unit;
detecting, by a liveness detection unit included in the user authentication device, whether the user identified by the user identification unit is a living person, by extracting one or more additional biometric markers from the visual input received by the face recognition unit, wherein the additional biometric markers comprise a heart rate and one or more bodily movements performed in response to a challenge provided by the liveness detection unit;
**characterized in that** the liveness detection unit comprises a secure element implemented as a tamper-resistant integrated circuit, wherein the secure element provides said challenge and verifies whether the bodily movements performed in response to said challenge correspond to an expected response.

8. The method of claim 7, wherein the liveness detection unit extracts the heart rate from the visual input by applying color amplification or motion amplification to the visual input.

9. The method of claim 7 or 8, wherein the additional biometric markers comprise face characteristics analyzed using multiple cameras or multiple views, and/or predefined movement patterns of the head of the user.

10. A computer program comprising executable instructions which, when executed by the user authentication device of any one of claims 1 to 6, cause said user authentication device to carry out the method of any one of claims 7 to 9.
